(19) Europäisches Patentamt European Patent Office Office européen des brevets

(11) **EP 3 226 501 B1**

(12) **EUROPEAN PATENT SPECIFICATION**

(45) Date of publication and mention of the grant of the patent:
**19.02.2020 Bulletin 2020/08**

(51) Int Cl.:
*H04L 27/26* (2006.01)     *H04L 27/34* (2006.01)

(21) Application number: **16163292.2**

(22) Date of filing: **31.03.2016**

(54) **COMMUNICATION DEVICE AND METHOD FOR TRANSMITTING DATA**

KOMMUNIKATIONSVORRICHTUNG UND VERFAHREN ZUR ÜBERTRAGUNG VON DATEN

DISPOSITIF DE COMMUNICATION ET PROCÉDÉ DE TRANSMISSION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2017 Bulletin 2017/40**

(73) Proprietor: **Intel IP Corporation Santa Clara, CA 95054 (US)**

(72) Inventor: **PASSAMANI, Antonio 38065 Mori, Trentino (IT)**

(74) Representative: **Lang, Johannes Bardehle Pagenberg Partnerschaft mbB Patentanwälte, Rechtsanwälte Prinzregentenplatz 7 81675 München (DE)**

(56) References cited:
**US-A1- 2014 198 834**

• **JONES D L ET AL: "An Active-Set Approach for OFDM PAR Reduction via Tone Reservation", IEEE TRANSACTIONS ON SIGNAL PROCESSING, IEEE SERVICE CENTER, NEW YORK, NY, US, vol. 52, no. 2, 1 February 2004 (2004-02-01), pages 495-509, XP011105734, ISSN: 1053-587X, DOI: 10.1109/TSP.2003.821110**

**EP 3 226 501 B1**

## Description

## Technical Field

Embodiments described herein generally relate to communication devices and methods for transmitting data.

## Background

Radio communication transmitters may operate at a much higher power level than their average transmitted power. This however reduces the efficiency of the radio transmission and requires low noise. Therefore, approaches that allow reducing the peak-to-average power are desirable.

Document JONES D L ET AL: "An Active-Set Approach for OFDM PAR Reduction via Tone Reservation", IEEE TRANSACTIONS ON SIGNAL PROCESSING, IEEE SERVICE CENTER, NEW YORK, NY, US, vol. 52, no. 2, 1 February 2004 (2004-02-01), pages 495-509, XP011105734, ISSN: 1053-587X, DOI: 10.1109/TSP.2003.821110, discloses a reduction of OFDM PAPR by using a method called "Tone Reservation" (see e.g. page 496, col. 2, first paragraph).

Document US 2010/0239038 A1 (Seyed-Alireza Seyedi-Esfahani, Peekshill, NY [US]), 23 September 2010 (2010-09-23), discloses different constellation rotations schemes to reduce PAPR.

## Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a communication system, e.g. an LTE (Long Term Evolution) communication system.
Figure 2    shows an OFDM (Orthogonal Frequency-Division Multiplexing) transmitter.
Figure 3    illustrates the transmission of OFDM symbols.
Figure 4    illustrates a square of possible QAM symbol locations in the complex plane.
Figure 5    illustrates an OFDM symbol trajectory in the complex plane.
Figure 6    illustrates a trajectory in the complex plane resulting from the trajectory of figure 5 by rotation.
Figure 7    shows a transmitter comprising a rotation unit.
Figure 8    illustrates an example of the application of the rotation to a large number of OFDM symbols.
Figure 9    shows an example of an efficiency curve for a transmitter.
Figure 10    shows a communication device.
Figure 11    shows a flow diagram illustrating a method for transmitting data.

## Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

The invention is defined by the subject-matter of the independent claims. Preferred embodiments are defined in the dependent claims. Aspects or embodiments that do not fall under the scope of the claims are useful to understand the invention.

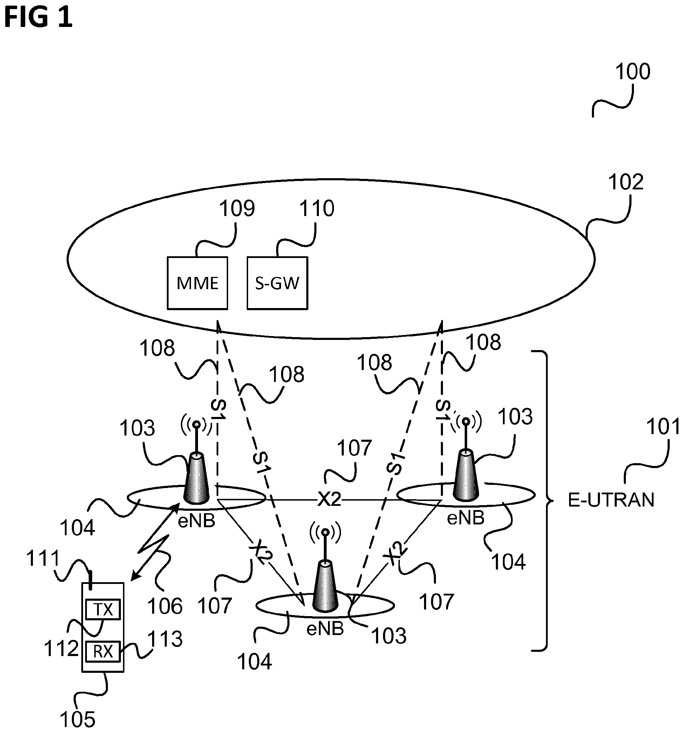

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in a mobile radio cell 104 may communicate with the core network 102 and with other mobile terminals 105 via the base station providing coverage in (in other words operating) the mobile radio cell. The mobile terminal 105 comprises an antenna 111 (or a plurality of antennas), a transmitter 112 and a receiver 113 which are both coupled to the antenna 111.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network.

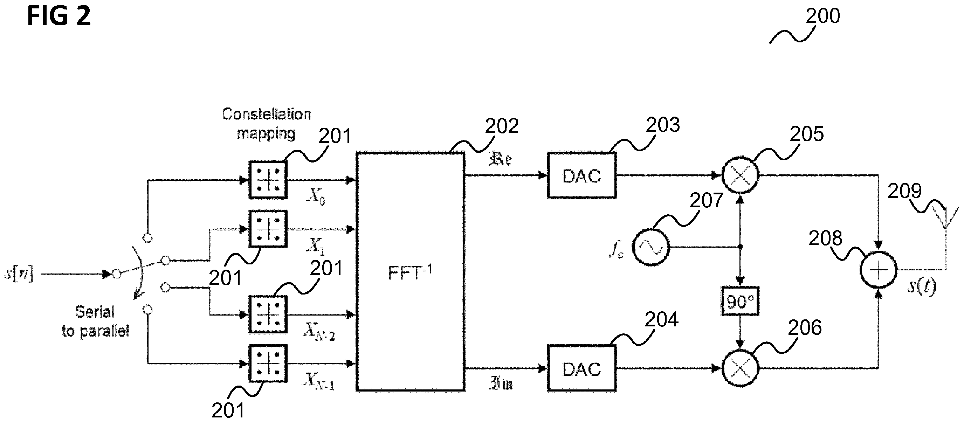

The mobile terminal 105 and its serving base station, i.e. the base station 103 operating the mobile radio cell 104 in which the mobile terminal 105 is located, for example communicate using OFDM (Orthogonal Frequency Division Multiplexing). Accordingly, the transmitter 111 of the mobile terminal 105 is for example an OFDM transmitter as illustrated in figure 2.

Figure 2 shows an OFDM transmitter 200.

The transmitter 200 serves to transmit a sequence of information symbols s[n]. The information symbols are mapped from serial to parallel such that they are distributed to N constellation mappers 201. The ith constellation mapper 201 maps a certain number of information symbols which have been distributed to it to a modulation symbol $X_i$. The number of information symbols mapped to one modulation symbol depends on the size of the information symbols (e.g. one byte) and the used modulation, e.g. 16-QAM (quadrature amplitude modulation) or 64-QAM.

The modulation symbols are supplied to an inverse FFT (fast Fourier transform) unit 202 which maps the modulation symbols to a digital representation of an OFDM waveform, i.e. a sequence (in time) of digital complex QAM symbols. The real components of these QAM symbols are supplied to a first DAC (digital to analog converter) 203 and the imaginary components of these QAM symbols are supplied to a second DAC 204. The baseband OFDM waveform generated by the first DAC 203 is upconverted to radio frequency by a first mixer 205 based on a carrier frequency supplied by an oscillator 207 and the baseband OFDM waveform generated by the second DAC 204 is upconverted to radio frequency by a second mixer 206 based on the carrier frequency shifted by 90°. The outputs of the mixers 205, 206 are added by an adder 208 and supplied as radio transmission signal s(t) to an antenna 209 which for example corresponds to the antenna 111.

It should be noted that a fractional-sampling-rate-converter can be potentially be inserted between the inverse FFT unit 202 and the DACs 203, 204.

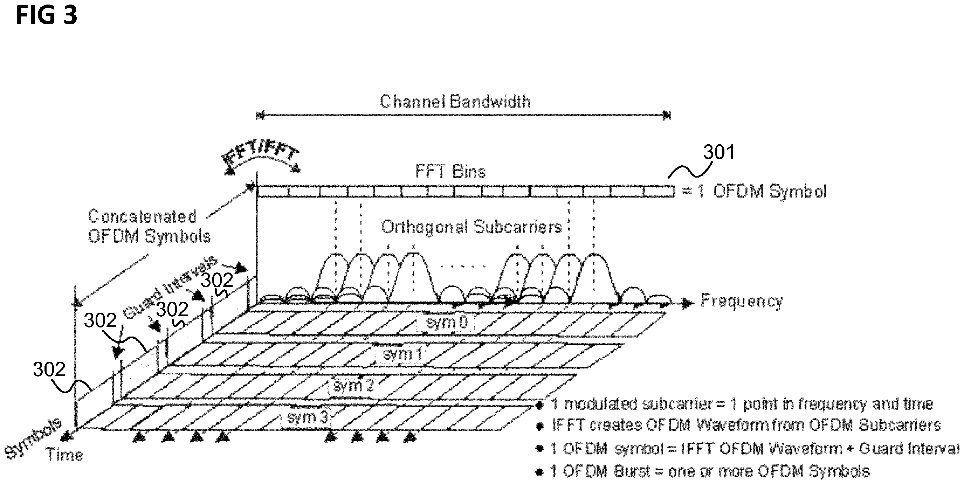

The set of modulation symbols $X_0$ to $X_{N-1}$ correspond to one OFDM symbol. This is illustrated in figure 3.

Figure 3 illustrates the transmission of OFDM symbols.

Each OFDM symbol 301 comprises a modulation symbol for each of a plurality of orthogonal subcarriers. The inverse FFT converts each OFDM symbol 301 into time domain resulting in a sequence of OFDM symbols 302 including guard intervals wherein each OFDM symbol 302 corresponds to a OFDM waveform.

A modern transmitter typically operates at a much higher power level than its average transmitted power. This reduces the efficiency of the transmission and requires a system with low noise. However, a low-noise transmitter is hard to design and requires more power to operate.

In a digital I/Q transmitter (i.e. a transmitter where an I/Q RF DAC is directly connected at the antenna) like the transmitter 200 the Peak-to-average Power-Ratio (PAPR) penalty typically is particularly high.

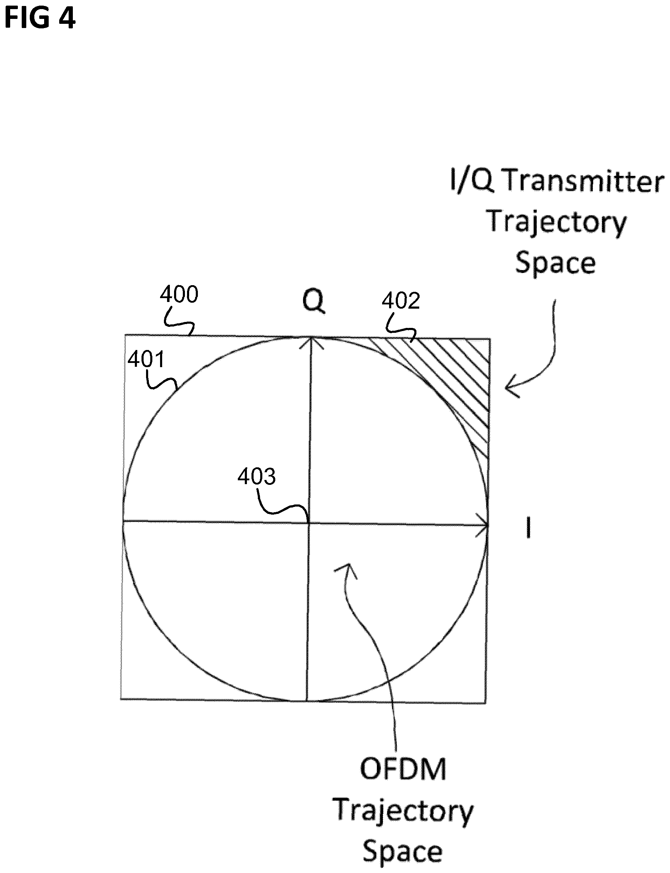

A digital I/Q transmitter gives a square of (complex) points on which signal trajectories can evolve. This is illustrated in figure 4.

Figure 4 illustrates a square 400 of possible QAM symbol locations in the complex plane.

However, OFDM modulated signal trajectories (i.e. OFDM waveforms) typically evolve inside a circle 401. By transmitting only points belonging to a circle, a digital I/Q transmitter never fully exploits the region of useful points of the transmitter but there is unused space 402 in the corners of the square 400.

Assuming that the square 400 has a side length of one, the points [-1,-1] [-1,+1] [+1,-1] [+ 1,+1] are never transmitted, since they do not belong to the circle with unitary ray centered at the origin 403.

OFDM trajectories (i.e. OFDM wave forms) last relatively short in time-domain, from one OFDM symbol to the next one. For example, in Wi-Fi, an OFDM symbol lasts only $1/312.5\text{kHz}=3.2\mu\text{s}$, with $0.8\mu\text{s}$ Guard-Interval. During this OFDM symbol period, only a limited amount of QAM symbols is transmitted, for example, 64 QAM symbols, out of which only 48 are actually used to carry information to be transmitted.

A 64 points trajectory (i.e. a OFDM waveform of one OFDM symbol represented by 64 complex QAM symbols) includes a limited number of points which do not form a circle in the I/Q complex plane but rather form a trajectory which has a point with a maximum distance to the origin (i.e. maximum absolute value) and a set of points whose absolute value is smaller.

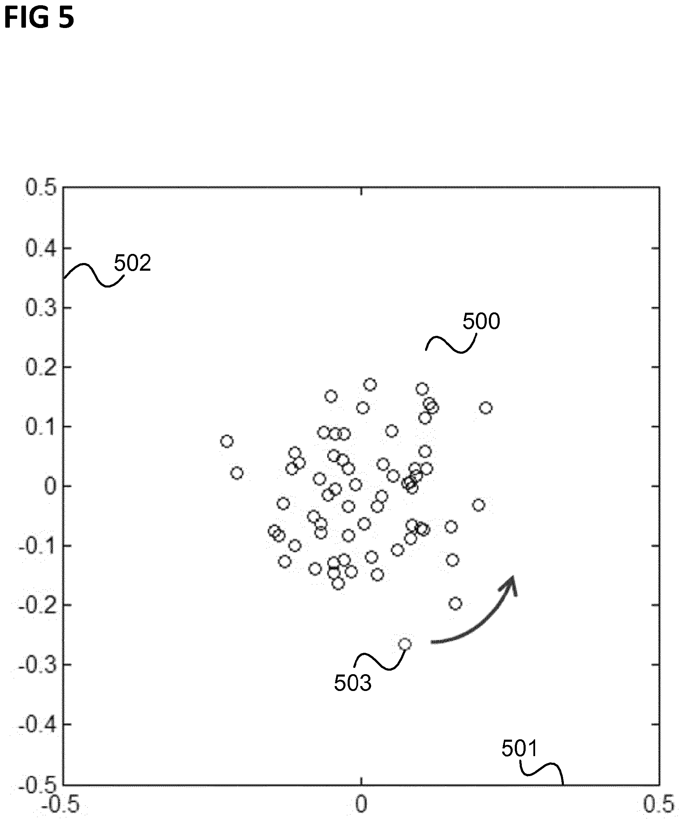

An example for such a trajectory is illustrated in figure 5.

Figure 5 illustrates a trajectory 500 in the complex plane wherein the real axis 501 corresponds to the I direction and the imaginary axis 502 corresponds to the Q direction.

The trajectory 500 comprises a maximum point 503 in terms of absolute value with the coordinates (0.07,-0.27). The distance from the origin (i.e. point (0,0)) of the maximum point 503 is 0.28.

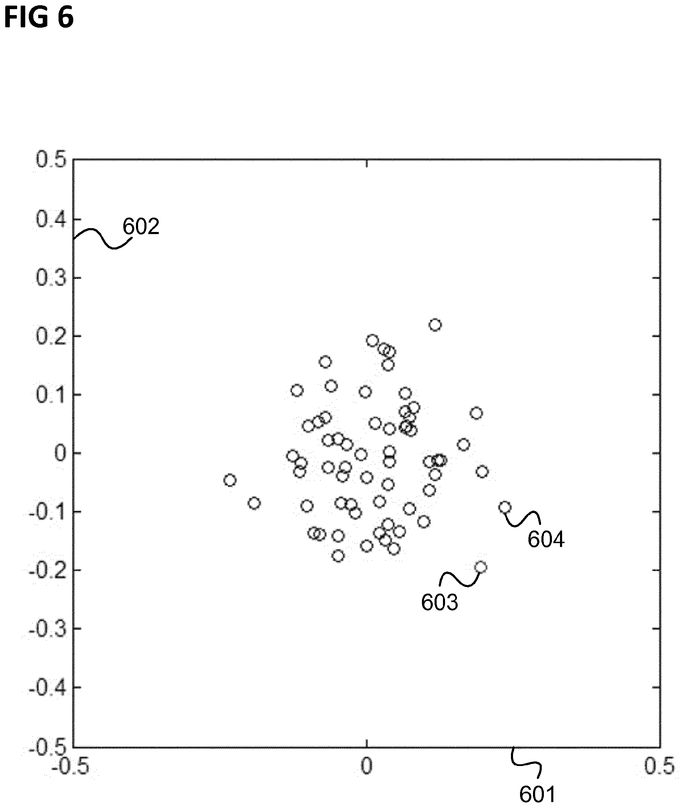

In this example, to reduce Peak-to-average Power-Ratio, a rotation of the whole set of points may be performed, namely rotating all the points of the trajectory counter-clockwise such that the maximum point is rotated to the nearest diagonal. This results in a trajectory as illustrated in figure 6.

Figure 6 illustrates a trajectory 600 in the complex plane resulting from the trajectory 500 by rotation.

As in figure 5, the real axis 601 corresponds to the I direction and the imaginary axis 602 corresponds to the Q direction.

The maximum point 603 (which corresponds to the maximum point 503 before rotation) now lies at (0.195,-0.195). Its absolute value is still 0.28.

The other points of the trajectory have been rotated as well. The point 604 with second-highest amplitude (i.e. second-highest absolute value) now falls at (0.24,-0.09), with a decrease of 0.03 of distance axis-direction compared to before rotation.

The whole trajectory, after rotation, stays inside a square, whose edges are 0.24*2 long. Previous to rotation, a square of 0.27*2 edge length was required. Therefore a reduction of 11% (0.03/0.27) of the square edge size (and thus of peak-to-average power) has been achieved in this example by the rotation.

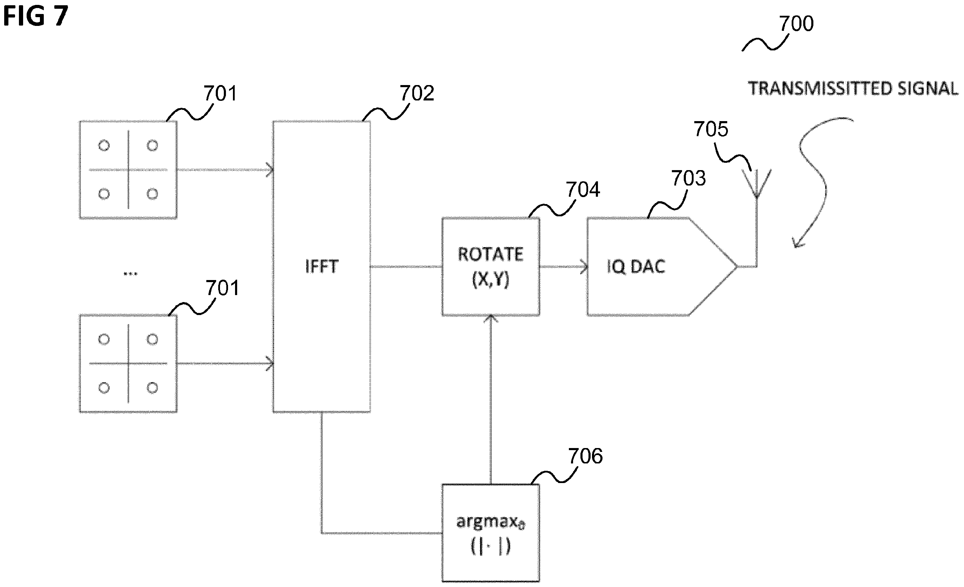

Figure 7 shows a transmitter 700.

Similarly to the transmitter 200, the transmitter 700 comprises constellation mappers 701, an IFFT unit 702, a DAC 703 and an antenna 705. Compared to the transmitter 200 shown in figure 2, the two paths for the I component and the Q component are combined to a single path (carrying complex QAM symbols) such that there is only a single (IQ) DAC 703.

A rotation unit 704 is arranged between the IFFT unit 702 and the DAC 703 which performs a rotation for each OFDM symbol, i.e. for each trajectory, based on the phase of the QAM symbol with the largest absolute value of this trajectory which is provided by a phase determiner 706.

For example, in mathematical terms, for each OFDM symbol, the rotation unit 704 applies a rotation according to

$$S_\vartheta = S e^{-i\left(\mathrm{mod}\left(\Delta\vartheta,\frac{\pi}{2}\right)-\frac{\pi}{4}\right)}$$

for all $S \in T$ (wherein T is the trajectory before rotation and $S_\vartheta$ is the trajectory point after rotation) with

$$\Delta\vartheta = \arg\max_{S \in T}(|S(\vartheta)|).$$

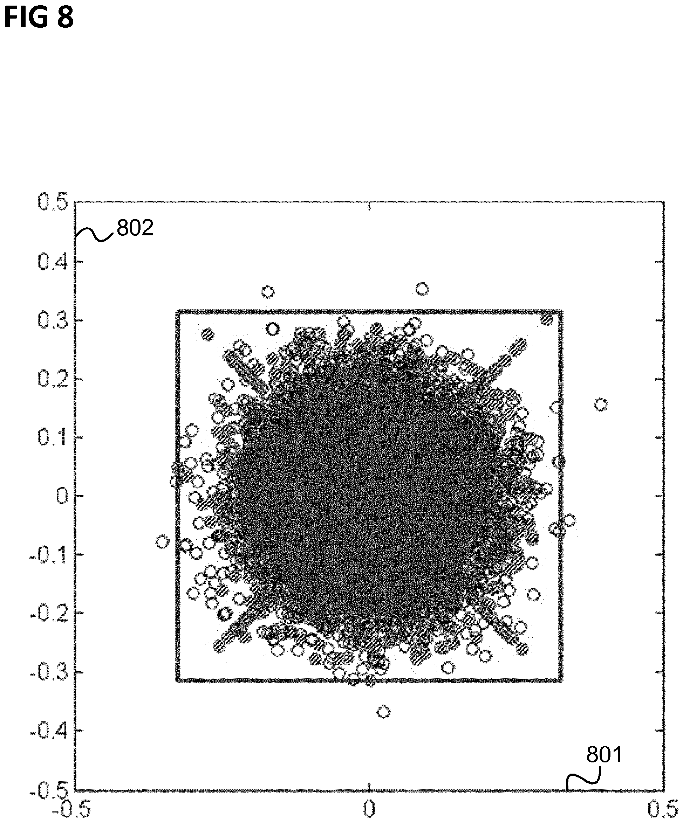

Figure 8 illustrates an example of the application of the rotation to a large number of OFDM symbols.

As in figures 5 and 6, trajectory points are shown in the complex plane wherein the real axis 801 corresponds to the I direction and the imaginary axis 802 corresponds to the Q direction.

QAM symbols belonging to a trajectory before the rotation are shown as empty circles and QAM symbols belonging to a trajectory after rotation are shown as hatched circles.

In this example with 64 subcarriers per OFDM symbol,

$$\max(\max(|\mathrm{Re}(S)|)) = 0.3942$$

$$\max(\max(|\mathrm{Im}(S)|)) = 0.3671$$

before rotation and

$$\max(\max(|\mathrm{Re}(S_\vartheta)|)) = 0.3258$$

$$\max(\max(|\operatorname{Im}(S_\vartheta)|)) = 0.3136$$

after rotation (wherein the inner maximum is over all trajectory points and the outer maximum is over all trajectories, i.e. all OFDM symbols). Furthermore

$$\max(\max(|S|) = \max(\max(|S_\vartheta|)) = 0.4230$$

i.e. absolute peak power is unchanged. In fact, the energy of the trajectories is not changed by the rotations, i.e. the same power is transmitted as without rotation. In this example, in [dB], the peak power reduction after rotation can be quantified to be

$$P = 20^* \log_{10}(0.3942) - 20^* \log_{10}(0.3260) = 1.65\text{dB}.$$

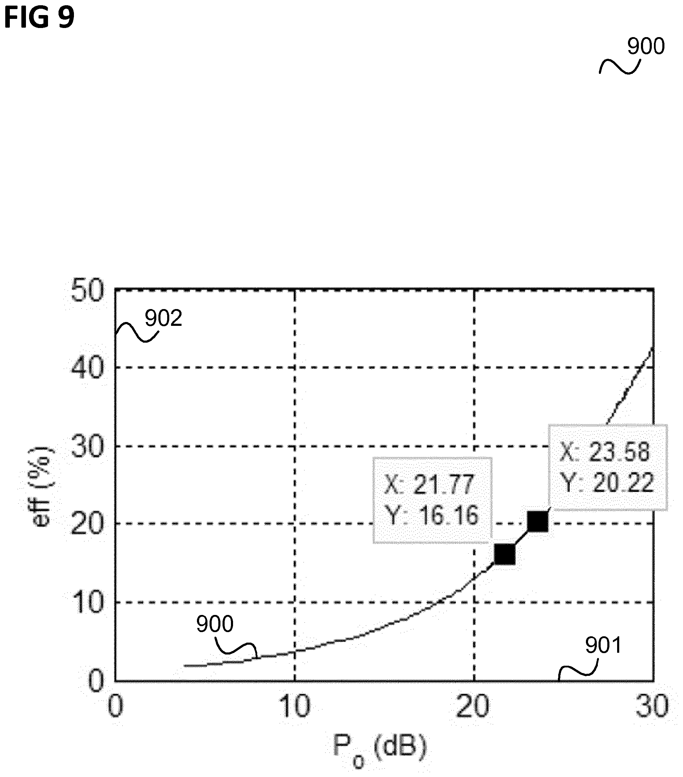

Figure 9 shows an example of an efficiency curve 900 for a transmitter.

Power increases from left to right along the horizontal axis 901 and efficiency increases from bottom to top along the vertical axis 902. For the example above, backannotating from the efficiency curve 900 shows an enhanced transmitter efficiency of up to 5%. Further, enhanced transmitter power and enhanced noise performances due to reduced required dynamic range in the DAC are achieved.

Similar rotations can be performed on a signal with more subcarriers, such as in the case of a signal with 1024 subcarriers, yielding similar results as before, i.e. 1-2dB peak (depending on signal statistics) peak I/Q power reduction.

The above approach can be seen to rely on the fact that the receiver (e.g. the base station in case the transmitter 700 is part of the mobile terminal 105) is being able to correct for absolute phase shifts of the whole trajectory. The common phase shift applied for each OFDM symbol is always lower than $|\pm45°|$, since the direction (i.e. the phase) of the maximum point can be moved to any of the most favorable diagonal directions in the complex plane, i.e. $\pm45°$ or $\pm135°$.

The phase information contained in a transmitted frame is however not impaired by a uniform rotation of the frame itself if, as it is typically the case, pilot sub-carriers are added to set of sub-carriers comprising the OFDM symbol, allowing the receiver to estimate and correct for the absolute phase offset of the transmitted OFDM symbol. For example, Wi-Fi uses up to 4 subcarriers out of the 64 available subcarriers as pilot, i.e. subcarriers comprising a known data sequence, against which the receiver tracks and corrects both for frequency and for phase offsets, correcting for offsets such as the one introduced by this approach.

As explained above, the rotation is performed at baseband frequency and therefore, it does not require high speed data paths. By increasing the complexity of the rotation (i.e. of the corresponding algorithm) a technique may be implemented where the maximum phase shift (i.e. the maximum rotation) is limited by a certain value at the cost of some decrease in rotation efficiency. Further, the minimum rotation required to optimize the maximum point may be determined and applied. This minimizes the impact of the rotations in terms of required counter-rotations amplitude at the receiver side, at the cost of algorithm complexity increase.

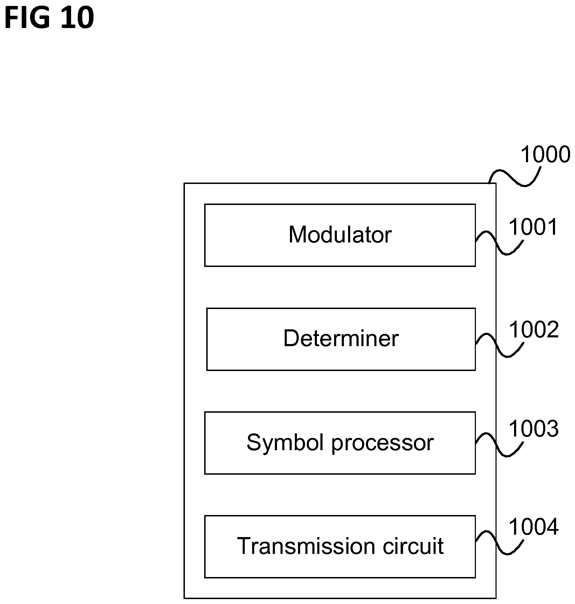

In summary, according to various examples, a communication device as illustrated in figure 10 is provided.

Figure 10 shows a communication device 1000.

The communication device 1000 comprises a modulator 1001 configured to map send data (i.e. data to be sent) to a set of quadrature amplitude modulation symbols.

Further, the communication device 1000 comprises a determiner 1002 configured to determine a rotation of the set of quadrature amplitude modulation symbols based on a difference between an absolute value of the real component and an absolute value of the imaginary component of the quadrature amplitude modulation symbol of the set of quadrature amplitude modulation symbols having a maximum absolute value being reduced by the rotation.

The communication device 1000 further comprises a symbol processor 1003 configured to apply the rotation to each quadrature amplitude modulation symbol of the set of quadrature amplitude modulation symbols and a transmission circuit 1004 configured to transmit the set of rotated quadrature amplitude modulation symbols via a radio communication channel.

In other words, amplitude quadrature modulation symbols of a trajectory, e.g. one OFDM symbol, are rotated to match the absolute value of the real component and the absolute value of the imaginary component of the amplitude quadrature modulation symbol with the largest absolute value more closely and thus to reduce the range of real values or the range of imaginary values of the amplitude quadrature modulation symbols (depending on which one was larger before the rotation). This can be seen to be achieved by rotating the amplitude quadrature modulation symbol with the largest absolute value into one of the four diagonal directions in the complex plane (or at least more closer to one of the diagonal directions than it was before). The rotation takes place in digital domain and the approach can be seen as a digital pre-distortion rotation technique.

This approach may for example allow to push the penalty of an I/Q system compared to a polar system down to 1.5dB.

The communication device may for example operate according to LTE or Wi-Fi. Accordingly, it may for example be a mobile terminal or a base station or an access point.

The components of the communication device (e.g. the modulator, the determiner and the symbol processor) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

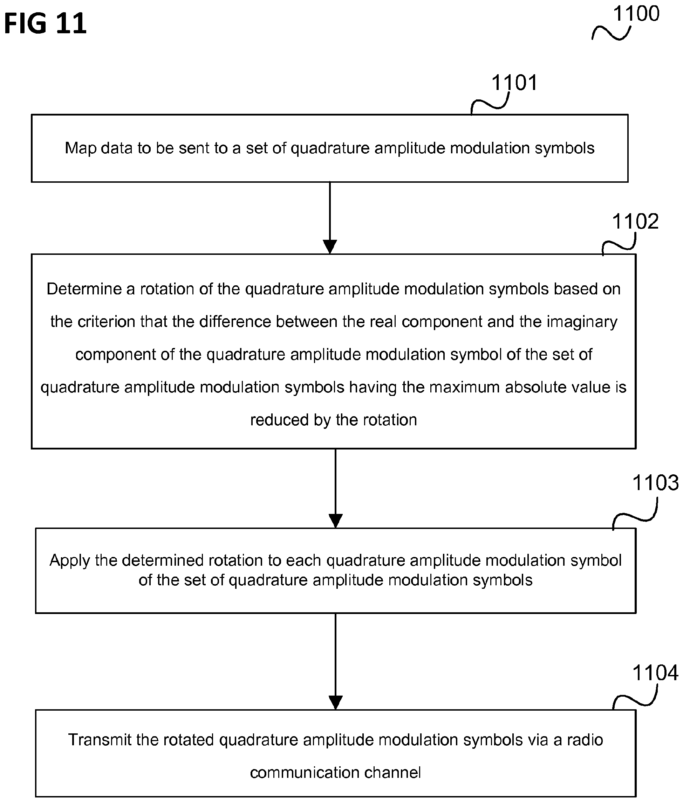

The communication device for example carries out a method as illustrated in figure 11.

Figure 11 shows a flow diagram 1100 illustrating a method for transmitting data, for example carried out by a communication device.

In 1101, the communication device maps send data to a set of quadrature amplitude modulation symbols.

In 1102, the communication device determines a rotation of the set of quadrature amplitude modulation symbols based on a difference between an absolute value of the real component and an absolute value of an imaginary component of the set of quadrature amplitude modulation symbol of the set of quadrature amplitude modulation symbols having a maximum absolute value being reduced by the rotation.

In 1103, the communication device applies the rotation to each quadrature amplitude modulation symbol of the set of quadrature amplitude modulation symbols.

In 1104, the communication device transmits the set of rotated quadrature amplitude modulation symbols via a radio communication channel.

It should be noted that one or more of the features of any of the examples above may be combined with any one of the other examples.

While specific aspects have been described, it should be understood by those skilled in the art that various changes in form and detail may be made therein without departing from the scope of the aspects of this disclosure as defined by the appended claims.

### Claims

1. A communication device comprising
   a modulator (1001) configured to map send data to a set of quadrature amplitude modulation symbols;
   a determiner (1002) configured to determine a rotation of the set of quadrature amplitude modulation symbols based on a difference being reduced by the rotation between an absolute value of the real component and an absolute value of an imaginary component of the quadrature amplitude modulation symbol of the set of quadrature amplitude modulation symbols having a maximum absolute value; wherein the determiner (1002) is configured to determine the quadrature amplitude modulation symbol having the maximum absolute value of the set of quadrature amplitude modulation symbols and to determine the rotation based on the phase of the quadrature amplitude modulation symbol having the maximum absolute value being closer to a diagonal direction in the complex plane;
   a symbol processor (1003) configured to apply the rotation to each quadrature amplitude modulation symbol of the set of quadrature amplitude modulation symbols; and
   a transmission circuit (1004) configured to transmit the set of rotated quadrature amplitude modulation symbols via a radio communication channel.

2. The communication device of claim 1, wherein the determiner (1002) is configured to determine the rotation based on a phase of the quadrature amplitude modulation symbol having the maximum absolute value.

3. The communication device of any one of claims 1 to 2, wherein the determiner (1002) is configured to determine the rotation to shift the phase of the quadrature amplitude modulation symbol having the maximum absolute value to a diagonal direction in the complex plane.

4. The communication device of any one of claims 1 to 3, wherein the modulator (1001) is configured to map the send data to an Orthogonal Frequency-Division Multiplexing symbol.

5. The communication device of any one of claims 1 to 4, wherein the set of quadrature amplitude modulation symbols form a digital representation of the waveform of an Orthogonal Frequency-Division Multiplexing symbol.

6. The communication device of any one of claims 1 to 5, wherein the transmission circuit (1004) comprises a digital-to-analog converter (203, 204).

7. The communication device of any one of claims 1 to 6, wherein the modulator (1001) is configured to map the send data to constellation symbols and to process the constellation symbols by an inverse fast Fourier transform to generate the set of quadrature amplitude modulation symbols.

8. The communication device of any one of claims 1 to 7, wherein the determiner (1002) is configured to determine the rotation based on predetermined limit for the rotation angle.

9. The communication device of any one of claims 1 to 8, wherein the determiner (1002) is configured to determine the rotation to reduce the difference between the absolute value of the real component and the absolute value of the imaginary component of the quadrature amplitude modulation symbol of the set of quadrature amplitude modulation symbols having the maximum absolute value to a predetermined margin.

10. The communication device of claim 9, wherein the determiner (1002) is configured to determine the rotation to reduce the difference to the predetermined margin based on the rotation being minimal.

11. Method for transmitting data comprising:

mapping send data to a set of quadrature amplitude modulation symbols;
determining a rotation of the set of quadrature amplitude modulation symbols based on a difference being reduced by the rotation between an absolute value of the real component and an absolute value of an imaginary component of the quadrature amplitude modulation symbol of the set of quadrature amplitude modulation symbols having a maximum absolute value;
applying the rotation to each quadrature amplitude modulation symbol of the set of quadrature amplitude modulation symbols, and consequently bringing the quadrature amplitude modulation symbol with maximum absolute value closer to a diagonal direction in the complex plane; and
transmitting the set of rotated quadrature amplitude modulation symbols via a radio communication channel.

12. The method of claim 11, comprising determining the quadrature amplitude modulation symbol having the maximum absolute value of the set of quadrature amplitude modulation symbols.

13. The method of claim 11 or 12, comprising determining the rotation based on a phase of the quadrature amplitude modulation symbol having the maximum absolute value.

**Patentansprüche**

1. Kommunikationsvorrichtung, die Folgendes umfasst:

einen Modulator (1001), der konfiguriert ist, Sendedaten auf eine Gruppe von Quadraturamplitudenmodulationssymbole abzubilden;
eine Bestimmungseinrichtung (1002), die konfiguriert ist, eine Drehung der Gruppe von Quadraturamplitudenmodulationssymbolen anhand dessen zu bestimmen, dass ein Unterschied zwischen einem absoluten Wert der realen Komponente und einem absoluten Wert einer imaginären Komponente des Quadraturamplitudenmodulationssymbols der Gruppe von Quadraturamplitudenmodulationssymbolen mit einem maximalen absoluten Wert durch die Drehung verringert wird;
wobei die Bestimmungseinrichtung (1002) konfiguriert ist, das Quadraturamplitudenmodulationssymbol mit dem maximalen absoluten Wert der Gruppe von Quadraturamplitudenmodulationssymbole zu bestimmen und die Drehung anhand dessen zu bestimmen, dass die Phase des Quadraturamplitudenmodulationssymbols mit dem maximalen absoluten Wert näher an einer diagonalen Richtung in der komplexen Ebene ist;
einen Symbolprozessor (1003), der konfiguriert ist, die Drehung auf jedes Quadraturamplitudenmodulationssymbol der Gruppe von Quadraturamplitudenmodulationssymbolen anzuwenden; und
eine Übertragungsschaltung (1004), die konfiguriert ist, die Gruppe von gedrehten Quadraturamplitudenmodulationssymbolen über einen Funckommunikationskanal zu senden.

2. Kommunikationsvorrichtung nach Anspruch 1, wobei die Bestimmungseinrichtung (1002) konfiguriert ist, die Drehung anhand einer Phase des Quadraturamplitudenmodulationssymbols mit dem maximalen absoluten Wert zu bestimmen.

3. Kommunikationsvorrichtung nach einem der Ansprüche 1 bis 2, wobei die Bestimmungseinrichtung (1002) konfiguriert ist, die Drehung so zu bestimmen, dass die Phase des Quadraturamplitudenmodulationssymbols mit dem maximalen absoluten Wert in eine diagonale Richtung in der komplexen Ebene verschoben wird.

4. Kommunikationsvorrichtung nach einem der Ansprüche 1 bis 3, wobei der Modulator (1001) konfiguriert ist, die Sendedaten auf ein Symbol eines orthogonalen Frequenzmultiplexverfahrens abzubilden.

5. Kommunikationsvorrichtung nach einem der Ansprüche 1 bis 4, wobei die Gruppe von Quadraturamplitudenmodulationssymbolen eine digitale Repräsentation der Wellenform eines Symbols eines orthogonalen Frequenzmultiplexverfahrens bildet.

6. Kommunikationsvorrichtung nach einem der Ansprüche 1 bis 5, wobei die Übertragungsschaltung (1004) einen Digital/Analog-Umsetzer (203, 204) umfasst.

7. Kommunikationsvorrichtung nach einem der Ansprüche 1 bis 6, wobei der Modulator (1001) konfiguriert ist, die Sendedaten auf Konstellationssymbole abzubilden und die Konstellationssymbole durch eine inverse schnelle FourierTransformation zu verarbeiten, um die Gruppe von Quadraturamplitudenmodulationssymbolen zu erzeugen.

8. Kommunikationsvorrichtung nach einem der Ansprüche 1 bis 7, wobei die Bestimmungseinrichtung (1002) konfiguriert ist, die Drehung anhand einer vorbestimmten Grenze für den Drehwinkel zu bestimmen.

9. Kommunikationsvorrichtung nach einem der Ansprüche 1 bis 8, wobei die Bestimmungseinrichtung (1002) konfiguriert ist, die Drehung so zu bestimmen, dass ein Unterschied zwischen dem absoluten Wert der realen Komponente und dem absoluten Wert der imaginären Komponente des Quadraturamplitudenmodulationssymbols der Gruppe von Quadraturamplitudenmodulationssymbole mit dem maximalen absoluten Wert in eine vorbestimmte Spanne verringert wird.

10. Kommunikationsvorrichtung nach Anspruch 9, wobei die Bestimmungseinrichtung (1002) konfiguriert ist, die Drehung, um den Unterschied zu der vorbestimmten Spanne zu verringern, anhand dessen zu bestimmen, dass die Drehung minimal ist.

11. Verfahren zum Senden von Daten, das Folgendes umfasst:

Abbilden von Sendedaten auf eine Gruppe von Quadraturamplitudenmodulationssymbolen;
Bestimmen einer Drehung der Gruppe von Quadraturamplitudenmodulationssymbolen anhand dessen, dass ein Unterschied zwischen einem absoluten Wert der realen Komponente und einem absoluten Wert einer imaginären Komponente des Quadraturamplitudenmodulationssymbols der Gruppe von Quadraturamplitudenmodulationssymbolen mit einem maximalen Wert durch die Drehung verringert wird;
Anwenden der Drehung auf jedes Quadraturamplitudenmodulationssymbol der Gruppe von Quadraturamplitudenmodulationssymbolen und anschließend Bringen des Quadraturamplitudenmodulationssymbols mit maximalem absoluten Wert näher an eine diagonale Richtung in der komplexen Ebene; und
Senden der Gruppe von gedrehten Quadraturamplitudenmodulationssymbolen über einen Funkkommunikationskanal.

12. Verfahren nach Anspruch 11, das umfasst, das Quadraturamplitudenmodulationssymbol mit dem maximalen absoluten Wert der Gruppe von Quadraturamplitudenmodulationssymbolen zu bestimmen.

13. Verfahren nach Anspruch 11 oder 12, das umfasst, die Drehung anhand einer Phase des Quadraturamplitudenmodulationssymbols mit dem maximalen absoluten Wert zu bestimmen.

**Revendications**

1. Dispositif de communication comprenant :

   un modulateur (1001) configuré pour mapper les données envoyées à un ensemble de symboles de modulation d'amplitude en quadrature ;
   un dispositif de détermination (1002) configuré pour déterminer une rotation de l'ensemble des symboles de modulation d'amplitude en quadrature sur la base d'une différence réduite par la rotation entre une valeur absolue de la composante réelle et une valeur absolue d'une composante imaginaire du symbole de modulation d'amplitude en quadrature de l'ensemble des symboles de modulation d'amplitude en quadrature ayant une valeur absolue maximale ; où
   le dispositif de détermination (1002) est configuré pour déterminer le symbole de modulation d'amplitude en quadrature ayant la valeur absolue maximale de l'ensemble des symboles de modulation d'amplitude en quadrature et pour déterminer la rotation sur la base de la phase du symbole de modulation d'amplitude en quadrature ayant la valeur absolue maximale étant plus proche d'une direction diagonale dans le plan complexe ;
   un processeur de symbole (1003) configuré pour appliquer la rotation à chaque symbole de modulation d'amplitude en quadrature de l'ensemble des symboles de modulation d'amplitude en quadrature ; et
   un circuit de transmission (1004) configuré pour transmettre l'ensemble des symboles de modulation d'amplitude en quadrature tourné par l'intermédiaire d'un canal de communication radio.

2. Dispositif de communication selon la revendication 1, dans lequel le dispositif de détermination (1002) est configuré pour déterminer la rotation sur la base d'une phase du symbole de modulation d'amplitude en quadrature ayant la valeur absolue maximale.

3. Dispositif de communication selon l'une quelconque des revendications 1 et 2, dans lequel le dispositif de détermination (1002) est configuré pour déterminer la rotation afin de décaler la phase du symbole de modulation d'amplitude en quadrature ayant la valeur absolue maximale à une direction diagonale dans le plan complexe.

4. Dispositif de communication selon l'une quelconque des revendications 1 à 3, dans lequel le modulateur (1001) est configuré pour mapper les données d'émission à un symbole de multiplexage par division de fréquence orthogonale.

5. Dispositif de communication selon l'une quelconque des revendications 1 à 4, dans lequel l'ensemble des symboles de modulation d'amplitude en quadrature forme une représentation numérique de la forme d'onde d'un symbole de multiplexage par répartition de fréquence orthogonale.

6. Dispositif de communication selon l'une quelconque des revendications 1 à 5, dans lequel le circuit de transmission (1004) comprend un convertisseur numérique-analogique (203, 204).

7. Dispositif de communication selon l'une quelconque des revendications 1 à 6, dans lequel le modulateur (1001) est configuré pour mapper les données d'émission aux symboles de constellation et pour traiter les symboles de constellation par une transformée de Fourier rapide inverse pour générer l'ensemble des symboles de modulation en quadrature.

8. Dispositif de communication selon l'une quelconque des revendications 1 à 7, dans lequel le dispositif de détermination (1002) est configuré pour déterminer la rotation sur la base d'une limite prédéterminée pour l'angle de rotation.

9. Dispositif de communication selon l'une quelconque des revendications 1 à 8, dans lequel le dispositif de détermination (1002) est configuré pour déterminer la rotation afin de réduire la différence entre la valeur absolue de la composante réelle et la valeur absolue de la composante imaginaire du symbole de modulation d'amplitude en quadrature de l'ensemble des symboles de modulation d'amplitude en quadrature ayant la valeur absolue maximale à une marge prédéterminée.

10. Dispositif de communication selon la revendication 9, dans lequel le dispositif de détermination (1002) est configuré pour déterminer la rotation afin de réduire la différence à la marge prédéterminée ; la rotation étant minimale.

11. Procédé de transmission de données comprenant les étapes suivantes :

    mapper les données envoyées à un ensemble de symboles de modulation d'amplitude en quadrature ;

déterminer une rotation de l'ensemble des symboles de modulation d'amplitude en quadrature sur la base d'une différence réduite par la rotation entre une valeur absolue de la composante réelle et une valeur absolue d'une composante imaginaire du symbole de modulation d'amplitude en quadrature de l'ensemble des symboles de modulation d'amplitude en quadrature ayant une valeur absolue maximale :

appliquer la rotation à chaque symbole de modulation d'amplitude en quadrature de l'ensemble des symboles de modulation d'amplitude en quadrature et, en conséquence, rapprocher le symbole de modulation d'amplitude en quadrature ayant la valeur absolue maximale d'une direction diagonale dans le plan complexe ; et
transmettre l'ensemble des symboles de modulation d'amplitude en quadrature tourné par l'intermédiaire d'un canal de communication radio.

12. Procédé selon la revendication 11, comprenant de déterminer le symbole de modulation d'amplitude en quadrature ayant la valeur absolue maximale de l'ensemble des symboles de modulation d'amplitude en quadrature.

13. Procédé selon la revendication 11 ou la revendication 12, comprenant de déterminer la rotation sur la base d'une phase du symbole de modulation d'amplitude en quadrature ayant la valeur absolue maximale.

**FIG 1**

**FIG 2**

# FIG 3

Channel Bandwidth

FFT/IFFT

FFT Bins

301

= 1 OFDM Symbol

Orthogonal Subcarriers

Concatenated OFDM Symbols

Guard Intervals

302

302

302

302

Frequency

sym 0

sym 1

sym 2

sym 3

Symbols

Time

- 1 modulated subcarrier = 1 point in frequency and time
- IFFT creates OFDM Waveform from OFDM Subcarriers
- 1 OFDM symbol = IFFT OFDM Waveform + Guard Interval
- 1 OFDM Burst = one or more OFDM Symbols

EP 3 226 501 B1

# FIG 4

I/Q Transmitter
Trajectory
Space

400

Q

402

401

403

I

OFDM
Trajectory
Space

**FIG 5**

**FIG 6**

FIG 7

# FIG 8

**FIG 9**

**FIG 10**

1000

Modulator 1001

Determiner 1002

Symbol processor 1003

Transmission circuit 1004

# FIG 11

1100

1101

Map data to be sent to a set of quadrature amplitude modulation symbols

1102

Determine a rotation of the quadrature amplitude modulation symbols based on the criterion that the difference between the real component and the imaginary component of the quadrature amplitude modulation symbol of the set of quadrature amplitude modulation symbols having the maximum absolute value is reduced by the rotation

1103

Apply the determined rotation to each quadrature amplitude modulation symbol of the set of quadrature amplitude modulation symbols

1104

Transmit the rotated quadrature amplitude modulation symbols via a radio communication channel

**EP 3 226 501 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* US 20100239038 A1

**Non-patent literature cited in the description**

* An Active-Set Approach for OFDM PAR Reduction via Tone Reservation. **JONES D L et al.** IEEE TRANSACTIONS ON SIGNAL PROCESSING. IEEE SERVICE CENTER, 01 February 2004, vol. 52, 495-509